# EUROPÄISCHE PATENTSCHRIFT

(11) **EP 3 823 854 B1**
(45) Veröffentlichungstag und Bekanntmachung des Hinweises auf die Patenterteilung: **25.10.2023**
(21) Anmeldenummer: 19724173.0
(22) Anmeldetag: 11.05.2019
(51) Int. Cl.: B60K 6/52, B60K 17/356, B60W 30/045, B60W 30/18

(54) **VERFAHREN ZUM BETREIBEN EINES KRAFTFAHRZEUGS, STEUERGERÄT UND KRAFTFAHRZEUG**
METHOD FOR OPERATING A MOTOR VEHICLE, CONTROLLER, AND MOTOR VEHICLE
PROCÉDÉ PERMETTANT DE FAIRE FONCTIONNER UN VÉHICULE AUTOMOBILE, APPAREIL DE COMMANDE ET VÉHICULE AUTOMOBILE

(30) Priorität: 19.07.2018 DE 102018212031
(43) Veröffentlichungstag der Anmeldung: 26.05.2021
(73) Patentinhaber: Robert Bosch GmbH, 70442 Stuttgart (DE)
(72) Erfinder: BIENIEK, Lars, 74523 Schwaebisch Hall (DE); NORDMANN, Martin, 71720 Oberstenfeld-Gronau (DE)
(86) Internationale Anmeldenummer: PCT/EP2019/062110
(87) Internationale Veröffentlichungsnummer: WO 2020/015885

(56) Entgegenhaltungen:
- EP-A1- 2 623 386
- EP-A1- 2 623 386
- EP-A1- 2 676 830
- EP-A1- 2 676 831
- EP-A1- 2 684 735
- EP-A1- 2 700 532
- EP-A1- 2 783 895
- EP-A1- 2 905 193
- EP-A1- 2 905 193
- EP-A1- 3 028 893
- EP-A1- 3 028 893
- EP-A1- 3 260 343
- EP-A1- 3 260 343
- WO-A1-2017/028800
- WO-A1-2017/028800
- JP-A- 2006 034 012
- US-A- 5 148 883
- US-A- 5 376 868
- US-A- 5 376 868
- US-A1- 2016 236 679
- US-A1- 2016 236 679

## Beschreibung

Die Erfindung betrifft ein Verfahren zum Betreiben eines Kraftfahrzeugs, das mehrere Antriebsräder sowie mehrere Antriebsmaschinen aufweist, wobei jedem Antriebsrad jeweils eine Antriebsmaschine, insbesondere Elektromaschine, zugeordnet ist.

Weiterhin betrifft die Erfindung ein Steuergerät zum Betreiben eines Kraftfahrzeugs, welches das oben genannte Verfahren durchführt, sowie ein Kraftfahrzeug und einem solchen Steuergerät.

### Stand der Technik

Verfahren, Steuergeräte und Kraftfahrzeuge der eingangs genannten Art sind aus dem Stand der Technik bekannt. Mit der zunehmenden Elektrifizierung von Kraftfahrzeugen nimmt auch die Elektrifizierung des Antriebsstrangs zu. Es ist bekannt, als Antriebsmaschinen neben einem Verbrennungsmotor zusätzlich eine oder mehrere elektrische Maschinen vorzusehen. Auch ist es bekannt, alternativ zum Verbrennungsmotor eine oder mehrere elektrische Maschinen vorzusehen. Zunehmend entstehen auch Konzepte, die einen radindividuellen Antrieb des Kraftfahrzeugs aufweisen. Dazu wird jedem Antriebsrad des Kraftfahrzeugs eine elektrische Maschine zugeordnet, die individuell ansteuerbar ist, um ein Vortriebsmoment des Kraftfahrzeugs zu erzeugen. Die Antriebsmaschinen in einem Kraftfahrzeug werden üblicherweise durch einen "Momentenpfad" in einem Steuergerät abgebildet, durch welchen ein Fahrerwunschmoment in ein Gesamtsollantriebsdrehmoment umgerechnet wird. Dieses Gesamtsollantriebsdrehmoment oder Vortriebsmoment wird an den oder die Antriebsmaschinen ausgegeben zu deren Ansteuerung.

Weiterhin ist es bekannt, Soll-Drehzahlen von Antriebsrädern in Abhängigkeit eines durch eine Lenkvorrichtung vorgegebenen Lenkwinkels vorzugeben, sodass das Kraftfahrzeug optimal der durch den Lenkwinkel vorgegebenen Soll-Kurvenbahn folgt. Ein entsprechendes Verfahren wird beispielsweise in der Offenlegungsschrift DE 10 2006 210 216 A1 beschrieben.

Die Offenlegungsschrift EP 2 623 386 A1 offenbart ein Verfahren zum Betreiben eines Kraftfahrzeugs, das mehrere Antriebsräder sowie mehrere Antriebsmaschinen aufweist, wobei jedem Antriebsrad jeweils eine Antriebsmaschine zugeordnet ist. Dabei ist vorgesehen, dass die Antriebsmaschinen bei einer Kurvenfahrt mit dem Kraftfahrzeug derart angesteuert werden, dass das Fahrverhalten des Kraftfahrzeugs dem Fahrverhalten eines Fahrzeugs mit Allradlenkung gleicht.

Aus dem Stand der Technik sind weiterhin die Druckschriften EP 3 028 893 A1, EP 3 260 343 A1, US 2016/236679 A1, EP 2 905 193 A1, US 5 376 868 A, WO 2017/028800 A1, EP 2 676 831 A1, EP 2 676 830 A1, EP 2 700 532 A1, EP 2 783 895 A1, EP 2 684 735 A1, US 5 148 883 A und JP 2006 034012 A bekannt.

### Offenbarung der Erfindung

Das erfindungsgemäße Verfahren mit den Merkmalen des Anspruchs 1 hat den Vorteil, dass die Kurvenbahn des Kraftfahrzeugs unabhängig von dem durch die Lenkvorrichtung vorgegebenen Lenkwinkel und der daraus folgenden Soll-Kurvenbahn eingestellt wird, wodurch sich ein anderes Lenkverhalten des Kraftfahrzeugs ergibt, als dass das durch die Lenkgeometrie vorgegeben werden kann. Es wird somit ein Lenkverhalten geboten, das über das einer herkömmlichen Lenkung durch Einstellen von Lenkwinkeln lenkbarer Rädern des Kraftfahrzeugs hinausgeht. Dazu wird erfindungsgemäß ein Gesamtsollantriebsdrehmoment erfasst, sowie eine aktuelle Fahrzeuggeschwindigkeit, sowie ein aktueller Lenkwinkel und die Radlasten aller Antriebsräder. Anschließend werden radindividuelle Bewegungsgeschwindigkeiten der Antriebsräder über der Fahrbahn in Abhängigkeit von der aktuellen Fahrzeuggeschwindigkeit, des aktuellen Lenkwinkels, einer bekannten Fahrwerksgeometrie des Kraftfahrzeugs und der Radlasten bestimmt. In Abhängigkeit der bestimmten Bewegungsgeschwindigkeiten und dem aktuellen Lenkwinkel wird für jedes Antriebsrad eine Soll-Drehzahl bestimmt und das Gesamtantriebsdrehmoment in Abhängigkeit der Radlasten auf alle Antriebsräder zum Beeinflussen der Solldrehzahl derart verteilt, dass ein Radius der Ist-Kurvenbahn kleiner als ein durch einen maximal möglichen Lenkwinkel vorgegebenen Soll-Kurvenbahn eingestellt wird, wobei jede Antriebsmaschine zum Einstellen der radindividuellen Soll-Drehzahl und des entsprechenden Drehmoments angesteuert werden, wobei mehrere Antriebsräder Schlup erzeugen. In Kenntnis der Fahrwerksgeometrie und des Verhaltens des Fahrwerks in Abhängigkeit eines Lenkwinkels kann eine radindividuelle Bewegungsgeschwindigkeit jedes Rads und damit eine radindividuelle Aufteilung des Gesamtsollantriebsmoments vorteilhaft ermittelt beziehungsweise bestimmt werden, sodass beispielsweise bis zum geometrisch maximalen Lenkwinkel eine optimale Geschwindigkeit über Grund ohne Schlupf im jeweiligen Antriebsrad erreicht wird. Dabei findet bevorzugt eine Drehmomentregelung der Antriebsmaschine statt, die in Abhängigkeit der Fahrzeugfahrgeschwindigkeit, der Fahrwerksgeometrie und optional der Reibwerte an den Rädern und des aktuellen Lenkwinkels erfolgt. Zum Beeinflussen der Soll-Drehzahl an dem jeweiligen Antriebsrad wird entweder das Drehmoment der jeweiligen Antriebsmaschine beeinflusst oder es findet bevorzugt eine Drehzahlregelung der Antriebsmaschine statt, die in Abhängigkeit der Fahrzeugfahrgeschwindigkeit, der Fahrwerksgeometrie, und optional der Reibwerte an den Rädern und des aktuellen Lenkwinkels erfolgt. Bei einem Kraftfahrzeug mit Allradantrieb und einer zentralen Antriebseinrichtung, wie ein Verbrennungsmotor, bei welchem eine Kraftverteilung über Wellen und offene Achsdifferentiale auf die Antriebsräder erfolgt, werden die Soll-Drehzahlen den Antriebsrädern mithilfe mechanischer Radbremsen angestellt, welche ein kurveninneres Rad abbremsen oder stärker bremsen als ein kurvenäußeres Rad, insbesondere in gleichem Maß, wie das kurvenäußere Rad über das offene Differential beschleunigt wird.

Bis zum geometrisch maximal möglichen Lenkwinkel oder Lenkanschlag ist die Kurvenfahrt dadurch schlupffrei durchführbar. Erst darüber hinaus, für engere Kurvenradien, wird erfindungsgemäß Schlupf zugelassen beziehungsweise tritt Schlupf auf. Die Reduzierung des Kurvenradius wird dadurch erreicht, dass kurvenäußeren Rädern eine höhere Soll-Drehzahl vorgegeben wird als kurveninneren Rädern. Auch ist es denkbar, die Drehrichtung von kurveninneren Rädern umzukehren, um den Kurvenradius zu verändern. Dadurch kann Stelle durchgeführt werden, wie bei einem Fahrzeug mit Kettenantrieb.

Erfindungsgemäß wird die Soll-Drehzahl für jedes Antriebsrad derart bestimmt, dass der Radius der Ist-Kurvenbahn kleiner als der Radius der durch den maximal möglichen Lenkwinkel vorgegebenen Soll-Kurvenbahn eingestellt wird. Durch das Verfahren wird damit erreicht, dass das Kraftfahrzeug eine engere Kurve fährt, als es durch den Lenkwinkel der lenkbaren Räder eigentlich geometrisch möglich wäre. Hierdurch werden besonders enge Kurvenradien ermöglicht, wie vorstehend bereits erwähnt.

Weiterhin ist bevorzugt vorgesehen, dass die Größe der Reduktion in Abhängigkeit von der aktuellen Fahrgeschwindigkeit gewählt wird. Dadurch ist das Kurvenverhalten des Kraftfahrzeugs an die Fahrgeschwindigkeit des Kraftfahrzeugs anpassbar, um einerseits eine hohe Fahrsicherheit und andererseits eine hohe Agilität, insbesondere bei niedrigen Fahrgeschwindigkeiten, zu gewährleisten. Insbesondere ist dazu vorgesehen, dass die Reduktion mit zunehmender Fahrgeschwindigkeit verringert und mit abnehmender Fahrgeschwindigkeit vergrößert wird, sodass bei niedrigen Fahrgeschwindigkeiten eine hohe Wendigkeit des Kraftfahrzeugs gewährleistet ist, während bei hohen Geschwindigkeiten eine hohe Spurtreue gewährleistet ist.

Gemäß einer bevorzugten Weiterbildung der Erfindung ist vorgesehen, dass bei Verwendung von radindividuellen Antrieben die Bewegungsrichtung des Fahrzeugs relativ zur Fahrzeuglängsachse bei Kurvenfahrt (= Schwimmwinkel) beeinflusst wird, indem durch die gezielte Vorgabe von Sollgeschwindigkeiten aller Antriebsräder ein gezieltes Über- oder Untersteuern um einen gedachten Kurvenmittelpunkt ermittelt und eingestellt wird. Das kurveninnere Vorderrad wird beispielsweise für einen Extremfall festgebremst, alle übrigen Räder beziehen sich auf diesen als "Mittelpunkt", im Gegensatz zum Festbremsen des kurveninneren Hinterrades und einer entsprechenden Drehzahlvorgabe für alle anderen Räder in Bezug auf dieses kurveninnere Hinterrad. Alternativ wird für den Extremfall das kurveninnere Hinterrad fest gebremst und alle übrigen Räder auf dieses als Mittelpunkt bezogen.

Erfindungsgemäß ist vorgesehen die Radlasten der Antriebsräder, die das an die Fahrbahn übertragbare Vortriebsmoment bestimmen, in der radindividuellen Ansteuerung der Radmomente und/oder Raddrehzahlen zu berücksichtigen, um aus Gesamtfahrzeugsicht immer das maximal mögliche Drehmoment und damit maximal mögliche Traktion verfügbar zu machen.

Bevorzugt werden die Radlasten der Antriebsräder beziehungsweise Räder des Kraftfahrzeugs in Abhängigkeit von einem radindividuellen Federweg und/oder Reifendruck bestimmt. Der Reifendruck lässt sich beispielsweise mittels bereits vorhandener Reifendrucksensoren erfassen und der Federweg durch eine ebenfalls bereits bekannte Federwegsensorik. In Kenntnis der Radlasten ist beispielsweise feststellbar, ob eines der Antriebsräder in der Luft hängt und somit keine Antriebskraft oder Bremskraft auf die Fahrbahn übertragen kann, oder ob es eingefedert ist und dadurch höhere Drehmomente übertragen kann. Dies kann auch dynamisch zwischen kurveninneren und kurvenäußeren Rädern erfasst werden. Auch ändert sich der effektive Kurvenradius des jeweiligen Antriebsrads mit dem tatsächlich vorliegenden Federweg, sodass in Kenntnis der oben genannten Parameter das Verfahren besonders genau durchführbar ist.

Des Weiteren ist bevorzugt vorgesehen, dass oben genanntes Verfahren dazu verwendet wird, das Manövrieren von Fahrzeugen zu unterstützen. Insbesondere auf Fahrbahnen mit niedrigem Reibbeiwert tendiert das Fahrzeug sich zum kurvenäußeren Rand zu bewegen und somit größere Kurvenradien zu beschreiben als vom Fahrer gewünscht. Das Ansteuern einzelner Antriebsräder derart, dass die kurvenäußeren schneller und die kurveninneren langsamer drehen, ermöglicht eine Korrektur der sich auf Grund der Fahrbahnverhältnisse einstellenden Trajektorie gegenüber der gewünschten Trajektorie. Dieses Verfahren wird bevorzugt mit der genannten Umfeldsensorik durchgeführt. Vorzugsweise wird das Verfahren bei einem Fahrzeug mit einer oder mehreren lenkbaren Achsen durchgeführt. Weiterhin ist bevorzugt vorgesehen, dass die Fahrzeuggeschwindigkeit insbesondere zusätzlich in Abhängigkeit von wenigstens einer Ist-Drehzahl, einer Beschleunigung, einer Gierrate, Daten eines satellitengestützten Navigationssystems und/oder einer Umfeldsensorik des Kraftfahrzeugs ermittelt wird. Von besonderem Vorteil ist das Erfassen der Fahrzeuggeschwindigkeit losgelöst von den Drehzahlen der Antriebsräder, um eine unabhängig ermittelte Fahrzeuggeschwindigkeit als Vergleich zu der Drehzahlregelung der Antriebsräder zur Verfügung zu haben, um Schlupf über alle Räder detektieren zu können. Dadurch werden Fehlregelungen und ein Ausbrechen des Fahrzeugs vermieden. Auch die Beschleunigung und/oder Gierrate des Kraftfahrzeugs können zur Bestimmung der Fahrzeuggeschwindigkeit genutzt werden.

Bevorzugt wird das Verfahren nur bei Geschwindigkeiten unterhalb eines vorgebbaren Grenzwerts durchgeführt. Bei radindividuellem Antrieb mit Drehzahlregelung führt das Überschreiten der Haftgrenze der Antriebsräder dazu, dass mehrere oder alle Räder gleichzeitig durchdrehen können und damit das Kraftfahrzeug instabil werden könnte. Dadurch, dass das Fahren nur bei Geschwindigkeiten unterhalb des vorgebbaren Grenzwertes durchgeführt wird, sind die Auswirkungen eines instabilen Fahrzustands einfacher zu korrigieren. Der Grenzwert wird entsprechend sicher gewählt und beispielsweise mithilfe von Versuchen ermittelt. Darüber hinaus wird dieser Haftungsabriss insbesondere mithilfe der von den Drehzahlen unabhängig ermittelten Fahrzeugfahrgeschwindigkeit erkannt, und/oder mithilfe der ermittelten Beschleunigung und/oder Gierrate.

Alternativ oder zusätzlich ist bevorzugt vorgesehen, dass die Aktivierung des oben beschriebenen Verfahrens über einen separaten Fahrmodus Wahlschalter erfolgt, der explizit vom Fahrer angewählt werden muss, um zu verhindern, dass ungewollt Schäden an der Achsgeometrie oder Lenkeinrichtung verursacht werden. Dabei wird das ausgegebene Drehwinkelsignal des Lenkgebers (z.B. Lenkrad) in Abhängigkeit der Geschwindigkeit des Kraftfahrzeugs und der Position des Schalters insofern angepasst, dass eine Aktivierung erst über einen fühlbaren Punkt hinaus erfolgt. Dieses kann durch die Freigabe eines zusätzlichen Lenkwinkels des Lenkgebers (z.B. Lenkrad) oder über die alternative Kalibrierung des vorhandenen Lenkwinkels erfolgen. Innerhalb des definierten Bereichs ist das Verfahren abgeschaltet und das Lenkverhalten wie gewohnt, außerhalb des definierten Lenkwinkelbereichs ist das Verfahren aktiv und das Lenksystem erlaubt enge Kurvenfahrten.

Weiterhin ist bevorzugt vorgesehen, dass eine aktuelle Fahrbahnbeschaffenheit ermittelt und das Verfahren in Abhängigkeit von der aktuellen Fahrbahnbeschaffenheit durchgeführt wird. Insbesondere erfolgt eine (automatische oder manuelle) Leistungsbegrenzung in Abhängigkeit der aktuellen Fahrbahnbeschaffenheit, um eine zu große Verspannung und damit eine Beschädigung des Antriebsstroms zu vermeiden. Die Fahrbahnbeschaffenheit kann beispielsweise mittels der Daten des satellitengestützten Navigationssystems und/oder mithilfe einer kamerabasierten Umfeldsensorik mit Bildauswertung oder mittels Daten eines elektronischen Stabilitätsprogramms (ESP) erfasst werden.

Weiterhin ist erfindungsgemäß vorgesehen, dass die Solldrehzahlen geregelt oder gesteuert werden. Hierdurch kann das Verfahren einfach gehalten werden. Weil jedoch bei einem gesteuerten System die Genauigkeit der Steuerung von den erfassten Parametern abhängt und diese wegen der erwünschten Einfachheit des Systems begrenzt sind, beispielsweise ohne fahrzeugunabhängige Geschwindigkeitserfassung und ohne Radlasterfassung, wird der gesteuerte Betrieb bevorzugt nur bei geringen Geschwindigkeiten, insbesondere unterhalb des genannten Grenzwertes, durchgeführt. Alternativ werden die Solldrehzahlen geregelt, wie zuvor bereits beschrieben.

Weiterhin ist bevorzugt vorgesehen, dass vom Fahrer (im Fahrzeug sitzend oder ferngesteuert von außerhalb des Fahrzeugs) vorprogrammierte Fahrfunktionen abgerufen werden können. Dieses könnten beispielsweise, aber nicht ausschließlich, sein:
A) Launch Control: es werden alle Antriebsaggregate derart "vorgespannt", dass sämtliches Spiel im Antriebstrang eliminiert wird, um einen Lastschlag beim Anfahren zu verhindern (z.B. Radantriebsmoment gegenhalten mit Radbremsen). Zusätzlich werden Systemgrenzen für die vorübergehende Sondersituation angehoben, d.h. eine kurzzeitige Überlastung zugelassen.
B) Fluchtwende: das Fahrzeug befindet sich im Stillstand oder kommt nach Vorwärtsfahrt zum Stillstand. Die Aktivierung des Verfahrens sorgt dafür, dass das Fahrzeug maximal rückwärts beschleunigt und dann eine 180°-Wende vollführt, so dass es in voller Fahrt die Richtung beibehält, jedoch nach Vollendung der Wende in Vorwärtsfahrt weiterfährt. Dabei werden die Räder radindividuell gelenkt, gebremst bzw. angetrieben und gezielt in den Schlupf gezogen, um eine Kippen des Fahrzeugs auszuschließen. Bevorzugt wird bei Verwendung des Features die Fahrbahnbeschaffenheit ermittelt um die Genauigkeit des Manövers zu erhöhen und den Antriebstrang zu schonen. Weiterhin wird dieses Verfahren bevorzugt in Kombination mit der Umfeldsensorik verwendet, um das Verbleiben des Fahrzeugs auf der Fahrbahn sicherzustellen.
C) Donut: das Fahrzeug befindet sich im Stillstand oder in langsamer Fahrt bis zu einer zu definierenden Geschwindigkeitsgrenze und beginnt nach Aktivierung dieses Features eigenständig "Kreise bzw. Donuts" auf die Fahrbahn zu zeichnen, indem z.B. die Vorderräder eingeschlagen werden und die Hinterräder beschleunigt und in den Schlupf gezogen werden, damit das Fahrzeugheck sich um das vordere innere Rad dreht. Bevorzugt wird bei Verwendung dieses Verfahrens die Fahrbahnbeschaffenheit ermittelt um die Genauigkeit des Manövers zu erhöhen und den Antriebstrang zu schonen. Weiterhin wird dieses Feature bevorzugt in Kombination mit einer Umfeldsensorik verwendet, um das Verbleiben des Fahrzeugs auf der Fahrbahn sicherzustellen.
D) Panzerwende: das Fahrzeug befindet sich im Stillstand und beginnt nach Aktivierung des Features exakt auf der Stelle zu drehen. Bevorzugt wird bei Verwendung des Verfahrens die Fahrbahnbeschaffenheit ermittelt, um die Genauigkeit des Manövers zu erhöhen und den Antriebstrang zu schonen. Weiterhin wird dieses Verfahren bevorzugt in Kombination mit einer Umfeldsensorik verwendet, um das Verbleiben des Fahrzeugs auf der Fahrbahn sicherzustellen.

Das erfindungsgemäße Steuergerät mit den Merkmalen des Anspruchs 7 zeichnet sich dadurch aus, dass es speziell dazu hergerichtet ist, bei bestimmungsgemäßem Gebrauch das erfindungsgemäße Verfahren durchzuführen. Es ergeben sich dabei für das Kraftfahrzeug die oben bereits genannten Vorteile.

Das erfindungsgemäße Kraftfahrzeug mit den Merkmalen des Anspruchs 8 zeichnet sich durch das erfindungsgemäße Steuergerät aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Dazu soll die Erfindung im Folgenden anhand der Zeichnung näher erläutert werden. Dabei zeigen
- Figur 1: ein Kraftfahrzeug in einer vereinfachten Draufsicht und
- Figur 2: ein Flussdiagramm zur Erläuterung eines vorteilhaften Verfahrens zum Betreiben des Kraftfahrzeugs.

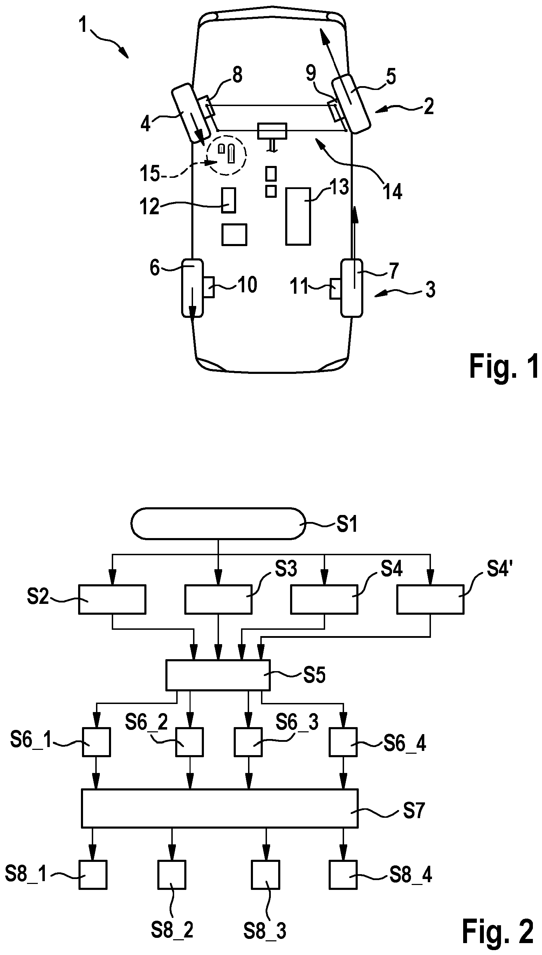

Figur 1 zeigt in einer vereinfachten Draufsicht ein Kraftfahrzeug 1, das eine Vorderradachse 2 und eine Hinterradachse 3 aufweist. Beide Radachsen 2, 3 weisen jeweils zwei Antriebsräder 4, 5 beziehungsweise 6, 7 auf. Jedem der Antriebsräder 4 bis 7 ist dabei eine Antriebsmaschine 8, 9, 10, 11 zugeordnet, die jeweils als Elektromaschine ausgebildet ist. Die Antriebsmaschinen 8 bis 11 sind dabei als radnahe, insbesondere als Radnabenantriebsmaschinen ausgebildet, welche direkt oder mittels eines Übersetzungsgetriebes ein positives oder negatives Antriebsdrehmoment auf das jeweils zugeordnete Antriebsrad 4 bis 7 übertragen können. Zum Ansteuern der Antriebsmaschinen 8 bis 11 ist ein Steuergerät 12 vorhanden, das mit den Antriebsmaschinen 8 bis 11 signaltechnisch verbunden ist. Außerdem sind die Antriebsmaschinen 8 bis 11 durch je eine Leistungselektronik mit einem elektrischen Energiespeicher 13 verbunden, der die Antriebsmaschinen 8 bis 11 mit elektrischer Energie für einen motorischen Betrieb versorgt, oder elektrische Energie bei einem generatorischen Betrieb der Antriebsmaschinen 8 bis 11 aufnimmt. Weiterhin ist mindestens einer der Radachsen 2, 3, vorliegend der der Vorderradachse 2, eine Lenkeinrichtung 14 zugeordnet, mittels welcher ein Lenkwinkel an den Antriebsrädern 4, 5 einstellbar ist.

In Abhängigkeit von einem geforderten Gesamtsollantriebsdrehmoment, das beispielsweise von einem Fahrer des Kraftfahrzeugs 1 durch Betätigung einer Pedaleinrichtung 15 vorgebbar ist, und einem geforderten Lenkwinkel, der beispielsweise durch Betätigen der Lenkeinrichtung 14 vorgebbar ist, steuert das Steuergerät 12 die Antriebsmaschinen 8 bis 11 an, sodass diese gemeinsam ein Vortriebsmoment auf das Kraftfahrzeug 1 ausüben.

Durch den radindividuellen elektrischen Antrieb ist eine schnelle Regelung und gezielte Ansteuerung der einzelnen Antriebsräder ermöglicht. Dazu wird das in Figur 2 näher erläuterte Verfahren zum Betreiben des Kraftfahrzeugs 1 durchgeführt, das insbesondere von dem Steuergerät 12 durchgeführt wird.

Figur 2 zeigt dazu ein Flussdiagramm anhand dessen das vorteilhafte Verfahren beschrieben werden soll. In einem ersten Schritt S1 wird das Kraftfahrzeug 1 in Betrieb genommen. Anschließend werden in einem Schritt S2 eine aktuelle Fahrzeugfahrgeschwindigkeit, in einem Schritt S3 ein aktueller Lenkwinkel der Lenkeinrichtung 14 sowie optional in einem Schritt S4' aktuelle Radlasten aller Antriebsräder 4 bis 7 und in Schritt S4 das vom Fahrer geforderte Gesamtsollantriebsdrehmoment erfasst. Die Schritte S2, S3, S4 und S4' werden entweder nacheinander, bevorzugt jedoch gleichzeitig durchgeführt. Zum Bestimmen der Radlasten werden insbesondere die radindividuellen Federwege des Fahrwerks und/oder der dem jeweiligen Antriebsrad vorliegende Reifendruck erfasst und ausgewertet.

In einem darauffolgenden Schritt S5 wird in Abhängigkeit von der aktuellen Fahrzeugfahrgeschwindigkeit, dem Lenkwinkel, der Radlasten und der bekannten Fahrwerksgeometrie vom Fahrwerk des Kraftfahrzeugs 1 radindividuelle Bewegungsgeschwindigkeiten ermittelt und in einem Schritt S6_1, S6_2, S6_3 und S6_4 für jedes der Antriebsräder 4 bis 7 zur Verfügung gestellt. Die Fahrwerksgeometrie ergibt sich insbesondere aus der Anordnung der Antriebsräder 4 bis 7 sowie deren Veränderung durch unterschiedliche Radlasten und/oder durch einen Eingriff der Lenkeinrichtung 14. Weil die geometrischen Zusammenhänge aus der Konstruktion des Kraftfahrzeugs 1 bekannt sind, können diese auf einfache Art und Weise durch das Steuergerät 12 berücksichtigt werden, um eine genaue radindividuelle Bewegungsgeschwindigkeit auf einer in der Figur nicht gezeigten Fahrbahn zu bestimmen.

In einem darauffolgenden Schritt S7 werden in Abhängigkeit der radindividuellen Bewegungsgeschwindigkeiten und dem geforderten Lenkwinkel Solldrehzahlen für jedes der Antriebsräder derart bestimmt, dass eine Ist-Kurvenbahn des Kraftfahrzeugs von einer durch den Lenkwinkel vorgegebenen Soll-Kurvenbahn abweicht, insbesondere einen kleineren Radius zur Soll-Kurvenbahn aufweist. Die ermittelten Solldrehzahlen werden dann den Antriebsmaschinen in den Schritten S8_1 bis S8_4 zur Verfügung gestellt. Weil die Fahrwerks- und Lenkgeometrie des Kraftfahrzeugs bekannt sind und durch das Steuergerät in einer Software/in einem Algorithmus abgebildet werden können, ist auch bei Kurvenfahrt und bei Fahrt auf unebenem Gelände der Weg eines jeden Antriebsrads absolut über Grund beziehungsweise über der Fahrbahn und relativ zu den anderen Antriebsrädern zu jedem Zeitpunkt bestimmbar. Weil durch die Federwegsensorik oder anderer Sensorik die Radlastverteilung aller Räder bekannt ist, wird das Gesamtvortriebsmoment (oder Bremsmoment) in Abhängigkeit dieser Radlasten auf die Antriebsräder 4 bis 7 verteilt. Der Federweg hat einen Einfluss auf den zurückzulegenden beziehungsweise zurückgelegten Weg des jeweiligen Antriebsrads, die Radlast hat einen Einfluss auf das übertragbare Drehmoment am Rad. Auf Federweg und Radlast kann beispielsweise durch den erfassten Reifendruck zurückgerechnet werden. Durch die geeignete Sensorik kann auf die Bodenbeschaffenheit und damit auch den Haftreibungsbeiwert geschlossen werden (alternativ manuell eingestellt) und somit das Gesamtvortriebsmoment begrenzt werden. In Kenntnis der Geometrie kombiniert mit der Drehzahlregelung durch die radindividuellen Antriebsmaschinen 8 bis 11 wird ein Kurvenradius kleiner als der durch die Lenkgeometrie geometrisch mögliche derart eingestellt, dass mehrere oder alle Antriebsräder 4 bis 7 auf der Fahrbahn durch ihre Bewegung außerhalb ihrer vorgesehenen Geometrie (lateralen) Schlupf erzeugen und je nach Beschaffenheit beispielsweise die Bodenoberfläche beschädigen können. Im Fall des Erreichens eines begrenzten Gesamtvortriebsmoments, insbesondere zum Schutz von Antriebstrangkomponenten, vor Erreichen des Fahrerwunsches wird das Fahrzeug langsamer oder bleibt einfach stehen, die Bodenoberfläche wird dabei nicht beschädigt (z.B. auf trockenem Asphalt). Ist das Gesamtvortriebsmoment bei hoher Traktion der Antriebsräder ausreichend groß, um eine Kurvenfahrt mit kleinerem als von der Lenkgeometrie vorgegebenen Radius zu ermöglichen, besteht die Gefahr der Beschädigung des Antriebstrangs, der Radaufhängungen oder der Lenkung.

Ein weiterer Vorteil im Unterschied zu herkömmlichen Lösungen in Kraftfahrzeugen ist, dass diese Funktion allein auf Basis der Drehzahlinformation in den radindividuellen Antriebsmaschinen 8 bis 11 funktionstüchtig ist, auch ohne Reibbremseinrichtungen und deren Raddrehzahlerfassung beziehungsweise - Überwachung.

Vorteilhafterweise sieht das Verfahren außerdem vor, dass ein Haftungsabriss aller Antriebsräder 4 bis 7 erfasst wird, indem insbesondere durch von der Raddrehzahl unabhängige Messungen der Fahrgeschwindigkeit, Beschleunigung und/oder Gierrate des Kraftfahrzeugs 1 im Vergleich mit den Raddrehzahlen oder Soll-Drehzahlen der Antriebsräder 4 bis 7 der Haftungsabriss ermittelt wird. Alternativ ist vorgesehen, dass das Verfahren nur dann durchgeführt wird, wenn sich das Kraftfahrzeug mit Fahrzeugfahrgeschwindigkeiten unterhalb eines vorgebbaren Grenzwertes bewegt, gegebenenfalls unterstützt durch eine Leistungsbegrenzung in Abhängigkeit der Beschaffenheit der Fahrbahn, auf welcher sich das Kraftfahrzeug 1 entlangbewegt. Dadurch wird erreicht, dass ein Überschreiten der Haftgrenze mehrerer, insbesondere aller Antriebsräder 4 bis 7 nicht zu fahrdynamisch schwierig zu beherrschbaren Fahrsituationen führt. Die Leistungsbegrenzung erfolgt dabei bevorzugt in Abhängigkeit eines Haftreibungsbeiwerts für vorbekannte Fahrbahnbeschaffenheiten, wie beispielsweise Asphalt, Gras, Kies, Schotter oder dergleichen, wobei die Leistungsbegrenzung manuell wählbar oder mittels entsprechender Sensorik automatisch einstellbar/erfassbar ist.

Um das System einfach zu halten, ist alternativ eine ausschließlich gesteuerte Funktion der Drehzahlregelung vorgesehen. Da bei dem gesteuerten System aber die Genauigkeit der Steuerung von den erfassten Parametern abhängig ist und diese wegen der gewünschten Einfachheit des Systems begrenzt sind, kann der gesteuerte Betrieb schneller zu ungewollten Verspannungen und damit zu Beschädigungen im Antriebssystem führen, beispielsweise aufgrund unterschiedlicher Reifendrücke und/oder Profiltiefen der Antriebsräder, die einen Einfluss auf die Fahrzeugdynamik haben. Um diese Einflüsse zu verringern, wird der gesteuerte Betrieb vorzugsweise auf Fahrbahnen mit verringertem Haftreibungsbeiwert, auf welchen ein Durchdrehen der Antriebsräder 4 bis 7 verhindert werden soll, und bei Geschwindigkeiten unterhalb des zuvor genannten Grenzwertes, durchgeführt.

Vorteilhafterweise wird das beschriebene Verfahren beziehungsweise System (sowohl geregelt als auch gesteuert) in Kraftfahrzeugen mit radindividuellem Antrieb auf Böden mit geringem Haftreibungsbeiwert eingesetzt, um Schlupf an mehreren oder allen Antriebsrädern zu ermöglichen und eine Beschädigung des Antriebssystems zu verhindern. Dabei kann an empfindlichen Böden, wie beispielsweise Rasen oder Waldboden, eine Beschädigung der Bodenoberfläche einhergehen.

## Patentansprüche

1. Verfahren zum Betreiben eines Kraftfahrzeugs (1), das mehrere Antriebsräder (4-7) sowie mehrere Antriebsmaschinen (8-11) aufweist, wobei jedem Antriebsrad (4-7) jeweils eine Antriebsmaschine (8-11), insbesondere Elektromaschine, zugeordnet ist, mit folgenden Schritten:
- Erfassen eines Gesamtsollantriebsdrehmoments,
- Erfassen einer aktuellen Fahrzeugfahrgeschwindigkeit, eines aktuellen Lenkwinkels, sowie der Radlasten aller Antriebsräder (4-7),
- Bestimmen radindividueller Bewegungsgeschwindigkeiten der Antriebsräder (4-7) über der Fahrbahn in Abhängigkeit von der aktuellen Fahrzeugfahrgeschwindigkeit, des aktuellen Lenkwinkels, einer bekannten Fahrwerksgeometrie des Kraftfahrzeugs (1), und der Radlasten,
- Bestimmen einer Solldrehzahl für jedes Antriebsrad (4-7) in Abhängigkeit der bestimmten Bewegungsgeschwindigkeiten und dem aktuellen Lenkwinkel derart, dass ein Radius einer Ist-Kurvenbahn kleiner als ein Radius einer durch einen maximal möglichen Lenkwinkel vorgegebenen Soll-Kurvenbahn eingestellt wird, wobei mehrere Antriebsräder (4-7) Schlupf erzeugen,
- Aufteilen des Gesamtsollantriebsdrehmoments in Abhängigkeit der Radlasten auf alle Antriebsräder (4-7) zum Beeinflussen der Solldrehzahl an dem jeweiligen Antriebsrad (4-7),
- Ansteuern jeder Antriebsmaschine (8-11) zum Einstellen der Solldrehzahl und des entsprechenden Drehmoments an dem jeweiligen Antriebsrad (4-7).

2. Verfahren nach Anspruch 1, **dadurch gekennzeichnet, dass** die Größe der Reduktion in Abhängigkeit von der aktuellen Fahrgeschwindigkeit gewählt wird.

3. Verfahren nach einem der vorhergehenden Ansprüche, **dadurch gekennzeichnet, dass** die Größe der Reduktion mit zunehmender Fahrgeschwindigkeit verringert wird.

4. Verfahren nach einem der vorhergehenden Ansprüche, **dadurch gekennzeichnet, dass** die Fahrzeugfahrgeschwindigkeit in Abhängigkeit von wenigstens einer Ist-Drehzahl, einer Beschleunigung, einer Gierrate, Daten eines satellitengeschützten Navigationssystems und/oder einer Umfeldsensorik des Kraftfahrzeugs (1) ermittelt wird.

5. Verfahren nach einem der vorhergehenden Ansprüche, **dadurch gekennzeichnet, dass** das Verfahren nur bei Geschwindigkeiten unterhalb eines vorgebbaren Grenzwertes durchgeführt wird.

6. Verfahren nach einem der vorhergehenden Ansprüche, **dadurch gekennzeichnet, dass** eine aktuelle Fahrbahnbeschaffenheit ermittelt und das Verfahren in Abhängigkeit von der aktuellen Fahrbahnbeschaffenheit durchgeführt wird.

7. Steuergerät (12) zum Betreiben eines Kraftfahrzeugs (1), das mehrere Antriebsräder (4-7) sowie mehrere Antriebsmaschinen (8-11) aufweist, wobei jedem Antriebsrad (4-7) jeweils eine Antriebsmaschine (8-11), insbesondere Elektromaschine, zugeordnet ist, **dadurch gekennzeichnet, dass** es speziell dazu hergerichtet ist, bei bestimmungsgemäßem Gebrauch das Verfahren nach einem der Ansprüche 1 bis 6 durchzuführen.

8. Kraftfahrzeug (1) mit mehreren Antriebsräder (4-7) und mit mehreren Antriebsmaschinen (8-11), wobei jedem Antriebsrad (4-7) jeweils eine Antriebsmaschine (8-11) zugeordnet ist, wobei die Antriebsmaschinen (8-11) insbesondere als Elektromaschinen ausgebildet sind, **gekennzeichnet durch** ein Steuergerät (12) nach Anspruch 7.

## Claims

1. Method for operating a motor vehicle (1) which has a plurality of drive wheels (4-7) and a plurality of drive machines (8-11), wherein each drive wheel (4-7) is assigned a respective drive machine (8-11), in particular an electric machine, having the following steps:
- acquiring a total target drive torque,
- acquiring a current vehicle speed of travel, a current steering angle and the wheel loads of all the drive wheels (4-7),
- determining wheel-individual speeds of movement of the drive wheels (4-7) over the roadway as a function of the current vehicle speed of travel, the current steering angle, a known chassis geometry of the motor vehicle (1), and the wheel loads,
- determining a target speed for each drive wheel (4-7) as a function of the determined speeds of movement and the current steering angle, in such a way that a radius of an actual curved path is set to be smaller than a radius of a target curved path predefined by a maximum possible steering angle, a plurality of drive wheels (4-7) producing slip,
- distributing the total target drive torque as a function of the wheel loads to all the drive wheels (4-7) to influence the target speed at the respective drive wheel (4-7),
- activating each drive machine (8-11) to set the target speed and the corresponding torque on the respective drive wheel (4-7).

2. Method according to Claim 1, **characterized in that** the magnitude of the reduction is chosen as a function of the current speed of travel.

3. Method according to one of the preceding claims, **characterized in that** the magnitude of the reduction is reduced with increasing speed of travel.

4. Method according to one of the preceding claims, **characterized in that** the vehicle speed of travel is determined as a function of at least one actual speed, an acceleration, a yaw rate, data from a satellite-based navigation system and/or from environmental sensors of the motor vehicle (1).

5. Method according to one of the preceding claims, **characterized in that** the method is carried out only at speeds below a predefinable limiting value.

6. Method according to one of the preceding claims, **characterized in that** a current roadway condition is determined and the method is carried out as a function of the current roadway condition.

7. Controller (12) for operating a motor vehicle (1) which has a plurality of drive wheels (4-7) and a plurality of drive machines (8-11), wherein each drive wheel (4-7) is assigned a respective drive machine (8-11), in particular an electric machine, **characterized in that** it is configured specifically to carry out the method according to one of Claims 1 to 6 during intended use.

8. Motor vehicle (1) having a plurality of drive wheels (4-7) and having a plurality of drive machines (8-11), wherein each drive wheel (4-7) is assigned a respective drive machine (8-11), the drive machines (8-11) being designed in particular as electric machines, **characterized by** a controller (12) according to Claim 7.

## Revendications

1. Procédé permettant de faire fonctionner un véhicule automobile (1) qui présente plusieurs roues motrices (4-7) ainsi que plusieurs machines d'entraînement (8-11), dans lequel respectivement une machine d'entraînement (8-11), en particulier une machine électrique, est associée à chaque roue motrice (4-7), comprenant les étapes suivantes consistant à :
- détecter un couple d'entraînement théorique total,
- détecter une vitesse de déplacement de véhicule actuelle, un angle de braquage actuel, ainsi que les charges de roue de toutes les roues motrices (4-7),
- déterminer des vitesses de mouvement spécifiques à chaque roue parmi les roues motrices (4-7) sur la chaussée en fonction de la vitesse de déplacement de véhicule actuelle, de l'angle de braquage actuel, d'une géométrie de châssis connue du véhicule automobile (1) et des charges de roue,
- déterminer une vitesse de rotation théorique pour chaque roue d'entraînement (4-7) en fonction des vitesses de déplacement déterminées et de l'angle de braquage actuel de telle sorte qu'un rayon d'une trajectoire courbe réelle est inférieur à un rayon d'une trajectoire courbe théorique prédéfinie par un angle de braquage possible au maximum, dans lequel plusieurs roues motrices (4-7) produisent un glissement,
- répartir le couple d'entraînement théorique total en fonction des charges de roue sur toutes les roues motrices (4-7) afin d'influencer la vitesse de rotation théorique au niveau de la roue d'entraînement respective (4-7),
- piloter chaque machine d'entraînement (8-11) pour régler la vitesse de rotation théorique et le couple correspondant au niveau de la roue motrice respective (4-7).

2. Procédé selon la revendication 1, **caractérisé en ce que** la grandeur de la réduction est choisie en fonction de la vitesse de déplacement actuelle.

3. Procédé selon l'une quelconque des revendications précédentes, **caractérisé en ce que** la grandeur de la réduction diminue avec une vitesse de déplacement croissante.

4. Procédé selon l'une quelconque des revendications précédentes, **caractérisé en ce que** la vitesse de déplacement de véhicule est établie en fonction au moins d'une vitesse de rotation réelle, d'une accélération, d'un taux de lacet, de données d'un système de navigation par satellite et/ou d'un système de capteurs d'environnement du véhicule automobile (1).

5. Procédé selon l'une quelconque des revendications précédentes, **caractérisé en ce que** le procédé n'est effectué que pour des vitesses inférieures à une valeur limite prédéfinissable.

6. Procédé selon l'une quelconque des revendications précédentes, **caractérisé en ce qu'**un état actuel de la chaussée est établi, et le procédé est effectué en fonction de l'état actuel de la chaussée.

7. Appareil de commande (12) permettant de faire fonctionner un véhicule automobile (1) qui présente plusieurs roues motrices (4-7) ainsi que plusieurs machines d'entraînement (8-11), dans lequel respectivement une machine d'entraînement (8-11), en particulier une machine électrique, est associée à chaque roue motrice (4-7), **caractérisé en ce qu'**il est spécialement conçu pour effectuer le procédé selon l'une quelconque des revendications 1 à 6 dans des conditions d'utilisation conforme.

8. Véhicule automobile (1) pourvu de plusieurs roues motrices (4-7) et de plusieurs machines d'entraînement (8-11), dans lequel respectivement une machine d'entraînement (8-11) est associée à chaque roue d'entraînement (4-7), dans lequel les machines d'entraînement (8-11) sont réalisées en particulier en tant que machines électriques, **caractérisé par** un appareil de commande (12) selon la revendication 7.
